Europäisches Patentamt

(19) European Patent Office

Office européen des brevets

(11) Publication number: **0 152 206**
**A2**

(12) **EUROPEAN PATENT APPLICATION**

(21) Application number: **85300502.3**

(22) Date of filing: **25.01.85**

(51) Int. Cl.⁴: **G 21 C 11/06**

(30) Priority: **03.02.84 US 576655**

(43) Date of publication of application:
**21.08.85 Bulletin 85/34**

(84) Designated Contracting States:
**BE DE FR IT SE**

(71) Applicant: **WESTINGHOUSE ELECTRIC CORPORATION**
**Westinghouse Building Gateway Center**
**Pittsburgh Pennsylvania 15235(US)**

(72) Inventor: **Freeman, Thomas Raphael**
**31 Black Oak Drive**
**Greensburg Pennsylvania(US)**

(72) Inventor: **Alsop, Brian Howard**
**113 Boone Road**
**Trafford Pennsylvania(US)**

(72) Inventor: **Sherwood, Donald Gayer**
**249 Lilac Drive**
**Monroeville Pennsylvania(US)**

(74) Representative: **van Berlyn, Ronald Gilbert**
**23, Centre Heights**
**London, NW3 6JG(GB)**

(54) Radial neutron reflector.

(57) The invention relates to nuclear reactors using light water as a coolant.

The space defined between the reactor core and the barrel around it has therein neutron reflecting structure, such as zirconia rods (25, 31), stacked zirconia blocks or stainless steel plates, for example, arranged to reflect, back into the reactor core, radially escaping neutrons which, in the absence of the reflecting structure, would be absorbed by the volume of reactor coolant now displaced by the structure.

FIG.1

1

# RADIAL NEUTRON REFLECTOR

This invention relates in general to the field of pressurized light water nuclear reactors and, in particular, to a radial neutron reflector surrounding the nuclear core for improved neutron economy to lower fuel costs.

In pressurized light water nuclear reactors, a reactive region commonly referred to as a nuclear core contains fissile fuel, such as uranium 235 or plutonium 239, in which sustained fission reactions occur to generate heat. Mechanical components known as reactor internals structurally support the core within a hermetically sealed pressure vessel. A cooling medium, also called the reactor coolant, is conducted into the pressure vessel, through the nuclear core, and out of the pressure vessel, thereby removing the heat generated by the nuclear core and transferring it to another cooling medium within heat exchangers which are located external of the pressure vessel. The second cooling medium is usually water which is converted into steam in the heat exchangers and is used to produce electricity by conventional steam turbine-electrical generator combinations.

In general, the nuclear core in such reactors comprises a plurality of elongate fuel assemblies having a substantially square cross-section. The reactor internals usually comprise an upper core support plate, a lower core support plate and a core barrel. The upper core support plate is supported by a flange within the pressure vessel.

The lower core support plate is attached to the core barrel, at its lower end. The upper portion of the core barrel is also supported by a flange within the pressure vessel. The core barrel comprises an elongated cylinder interposed between the nuclear core and the cylindrical wall of the pressure vessel. The nuclear core is positioned within the core barrel and between the upper and lower core support plates. Typically, the reactor coolant enters the pressure vessel through one or more inlet nozzles, flows downward between the pressure vessel and the outside of the core barrel, turns 180°, and flows upward through the lower core support plate and through the core. The heated reactor coolant then turns 90° and exits the pressure vessel through one or more exit nozzles, thence to be conducted to the heat exchangers previously mentioned.

In any reactor, such as the one described, the fission rate of the nuclear fuel or the number of neutrons produced by the fission process must remain constant. It is well known that each neutron through fissioning produces heat and two or more other neutrons. To sustain the nuclear chain reaction, at least one of the newly produced neutrons must then fission another atom of fuel. The reactor coolant comprising light water is an excellent moderator of neutrons; hence, it is the primary means by which the fast neutrons produced by the fission process are thermalized or slowed down so that another fission may occur to sustain the chain reaction. The excess neutrons are accounted for in a number of different ways. Some are slowed down and absorbed by a nuclear poison, such as boron, which is dissolved in the primary coolant. Others are caused to be absorbed by axially movable control rods which are interspersed throughout the nuclear core and made of materials specifically selected to absorb neutrons, control rods being well known in the art as the primary means for controlling the operating power level of a nuclear reactor. Still other neutrons are absorbed by poisons which build up within the nuclear fuel and are caused by the fission process itself.

In order to extend the life of the nuclear core as long as practical so as to minimize time-consuming reactor shutdowns for refueling purposes, the fuel assemblies are provided with enriched nuclear fuel, usually enriched uranium 235. This excess of reactivity is designed into the core at startup and later is used to extend the life of the core. The amount of enrichment continuously decreases as the reactor operates until such time as the fuel can no longer sustain the chain reaction. Then the reactor must be shut down and refueled. During the initial stages of reactor operation or during the phase which is known as beginning of life, special neutron absorbing control rods are inserted within the core and/or additional soluble poisons are dissolved within the reactor coolant to absorb the excess reactivity. As the excess reactivity decreases, the amount of insertion of the special control rods and/or the amount of soluble poison is decreased to allow use of the excess reactivity. In this manner, the excess reactivity is held in abeyance until it is needed.

Enriched uranium is extremely expensive. Therefore, it is desirable to reduce the amount of enrichment whenever possible but without reducing the extended length of the life of the core. One recognized method of accomplishing this is to make more efficient use of the neutrons produced by the fission process. An area where present day nuclear reactors are relatively inefficient, as regards neutron economy, is the region of the reactor between the internal diameter of the pressure vessel and the core and, in particular, the region between the internal diameter of the core barrel and the outer periphery of the fuel assemblies. Since the fuel assemblies are square in cross-section, side-by-side stacking of the fuel assemblies produces an irregular non-circular outer periphery of the core. Typically, stainless steel vertical plates are positioned against the irregular periphery of the core.

The vertical plates are supported by a plurality of horizontal "former plates" bolted to the vertical reflector plates. The former plates are in turn bolted to the core barrel.

The former plates are specially shaped to provide for a transition from the irregular core periphery to the circular shape of the core barrel. The vertical plates provide lateral support for the core and prevent the reactor coolant from bypassing the core. Although not originally intended, it has been determined that the vertical stainless steel plates also provide a neutron reflection function in that they reflect some of the excess neutrons produced by the fission process and attempting to escape radially from the core back into the core. Unfortunately, the conventional stainless steel plates are not as efficient in performing this radial reflector function as desired. For instance, in the space between the vertical stainless steel and the horizontal former plates there is primary coolant which desirably receives heat from the core barrel, the former plates and the vertical plates but which also is a poor neutron reflector and in fact absorbs a great number of the radially escaping neutrons.

It is the principal object of the invention to mitigate this loss of radially escaping neutrons, and the invention, accordingly resides in a nuclear reactor using light water as a reactor coolant, and comprising a nuclear core and a core barrel which latter surrounds the core and, together therewith, defines therebetween a radial space forming a core bypass for some of the reactor coolant, characterized in that said radial space has disposed therein neutron reflecting means comprising a substantially non-hydrogen containing material fitted within the radial space so as to minimize the coolant-containing capacity thereof.

In one preferred embodiment of the invention, the reflecting means comprise a plurality of elongate reflector assemblies arranged side-by-side, and each of which assemblies comprises an elongate metal can containing a plurality of neutron reflector elements which, in one instance, are rods extending longitudinally side-by-side and, in another embodiment, are metal blocks stacked one upon the other and substantially filling the can. Still in another embodiment, the neutron reflecting means comprise metal plates each of which has an outline substantially conforming to the cross-sectional configuration of the radial space between the nuclear core and the core barrel, and which plates are stacked one upon the other so as to substantially fill the radial space. Both the stack of blocks in each metal can and the stack of metal plates in the radial space have coolant-flow passages extending therethrough to provide for adequate cooling.

All of these embodiments have in common with each other the use of neutron reflecting means for reflecting, back into the reactor core, radially escaping neutrons which otherwise, i.e. in the absence of such means, would be absorbed by the volume of reactor coolant ordinarily present in the space between the core and the core barrel and now displaced by the neutron reflecting means provided in accordance with the invention.

Preferred embodiments of the invention will now be described, by way of example, with reference to the accompanying drawings, in which:

Figure 1 is a partial plan view of one-quarter of a nuclear core illustrating the neutron reflector region to which the invention is applicable;

Figure 2 is a partial cross-sectional view of the portion of the core and reflector region taken along line 2-2 of Figure 1 and illustrating the use of zirconia rods as reflector elements;

Figure 3 is a cross-sectional plan view of the embodiment of Figure 2 taken along the line 3-3 of Figure 2;

Figure 4 is a partial cross-sectional view of the portion of the core and reflector region taken along the line 2-2 of Figure 1 and illustrating the use of zirconia blocks as reflector elements;

Figure 5 is a cross-sectional plan view of the embodiment of Figure 4 taken along the line 5-5 of Figure 4;

Figure 6 is a partial cross-sectional view of the portion of the core and the reflector region taken along the line 2-2 of Figure 1 and illustrating the use of stainless steel plates as reflector elements; and,

Figure 7 is a full cross-sectional view of the embodiment of Figure 6 taken along the line 7-7 of Figure 6.

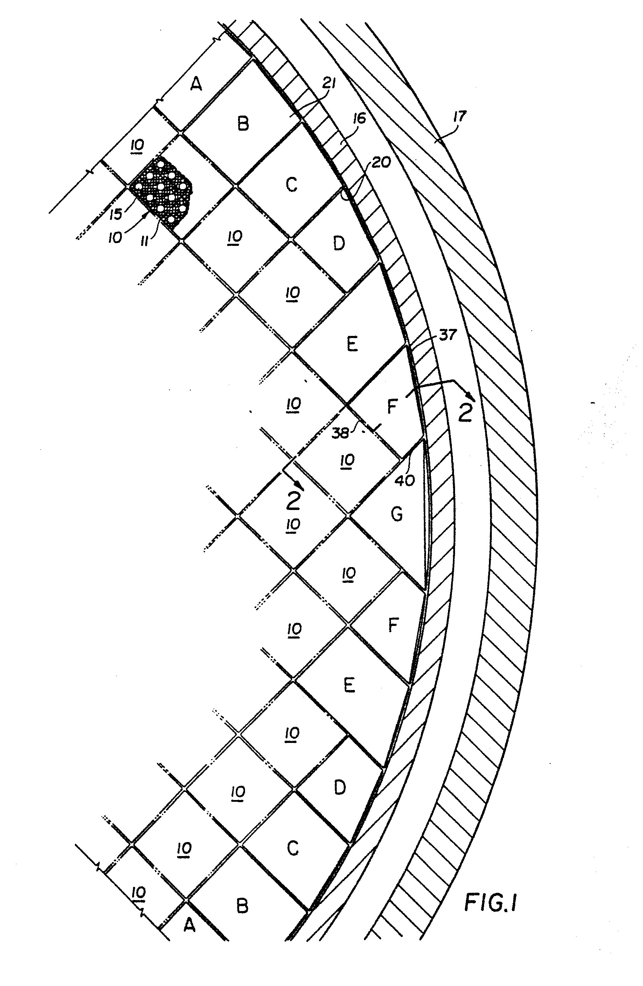

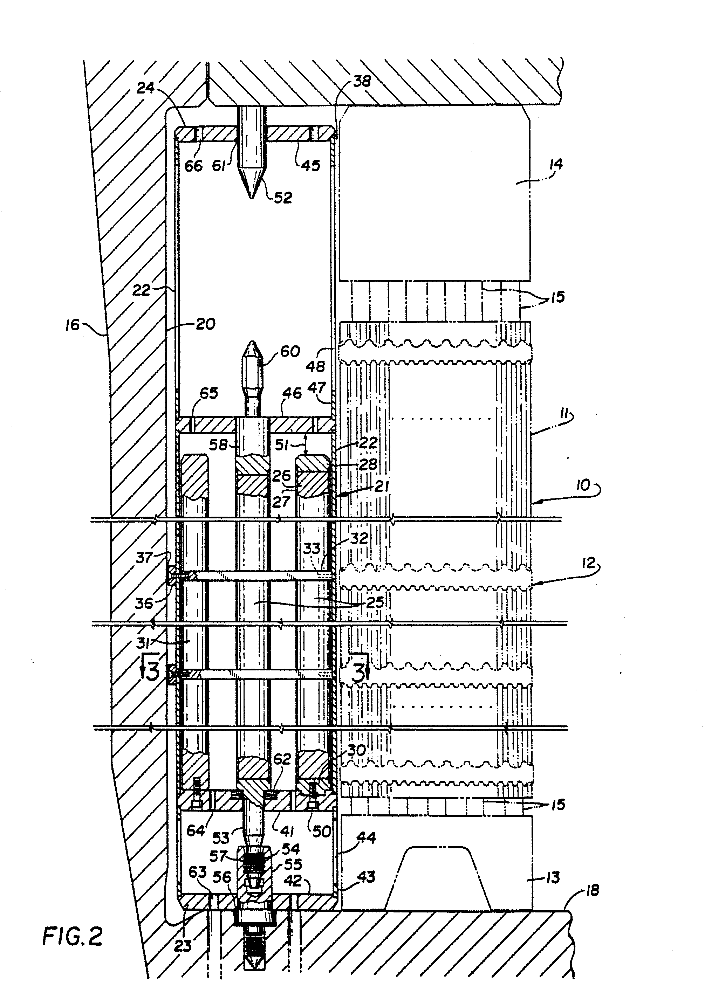

Referring now to the drawings, specifically Figure 1 which depicts a quarter section of a nuclear core, it should be understood, of course, that the three one-quarter portions of the core not shown in Figure 1 each have the same configuration as the one shown in Figure 1 and together with which they form a full core cross-section. In the example used, the nuclear core comprises 193 individual fuel assemblies 10 having a substantially square cross-section which permits side-by-side stacking, one against each other; only those fuel assemblies 10 which form the core periphery are shown in Figure 1, it being understood that similar fuel assemblies are located inboard of those which are shown. It is to be further understood that the invention is applicable to cores having any number of fuel assemblies and any irregular periphery. Each fuel assembly 10 comprises an array of elongated fuel rods 11 held in spaced relationship to each other by a plurality of grids 12 (Fig. 2) spaced from each other along the fuel assembly 10. Each fuel rod 11 comprises a tube filled with nuclear fuel pellets and having its ends sealed. A coolant flow inlet nozzle 13 and a coolant flow outlet nozzle 14 are provided at the fluid inlet and outlet ends, respectively, of the fuel assembly 10. Guide thimbles 15 comprising hollow tubes are located at predetermined positions in each fuel assembly 10, and they have therein movable control rods for controlling the fission process, as well known in the art.

A core barrel 16 which typically comprises a stainless steel cylindrical support member surrounds the nuclear core. The core barrel 16 includes a flange (not shown) by which the core barrel 16 is structurally supported within the pressure vessel 17 (Fig. 1). A lower core support plate 18 (Fig. 2) is welded to the lower portion of the core barrel 16. The nuclear core rests upon and is supported by the lower core support plate 18. An additional function of the core barrel 16 is to provide a reactor coolant flow separation barrier whereby the reactor coolant inlet flow within the pressure vessel 17 is external of core barrel 16 and the core coolant flow is internal of the core barrel 16. The configuration and function of the core barrel are also well known in the art.

The space between the inner wall 20 of the core barrel 16 and the irregular periphery of the peripheral fuel assemblies 10 is known as the core reflector region. Due to the nature of the core periphery, the reflector region also has an irregular shape and may be divided into basic shapes, such as the seven shapes A, B, C, D, E, F & G as shown in Figure 1. There is a total of four each of shapes A and G and a total of eight each of shapes B, C, D, E, and F around the entire core periphery. Of course, the reflector region may be divided into shapes other than those shown in Figure 1.

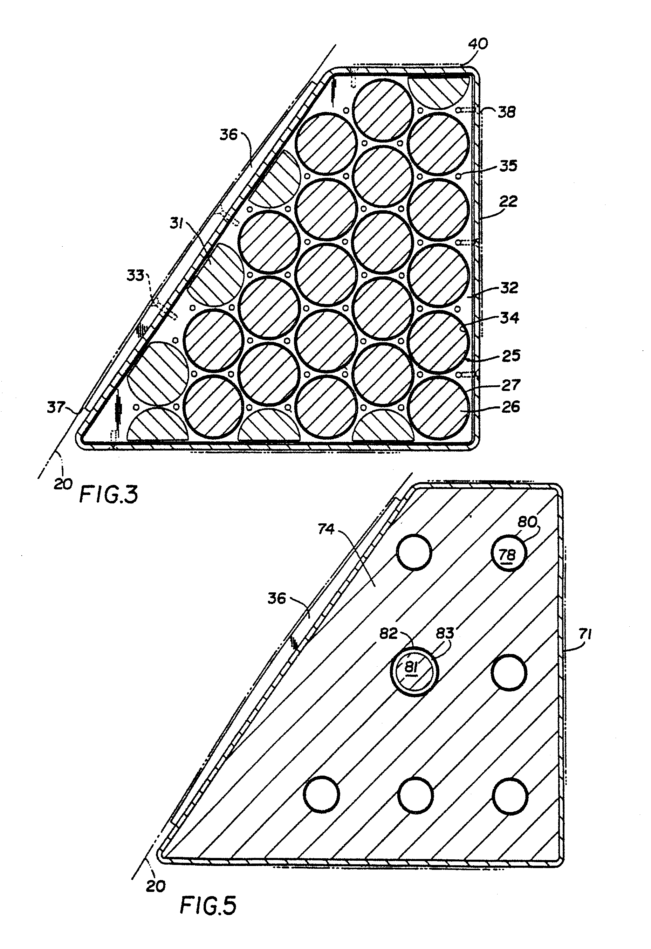

Figures 2 and 3 illustrate the details of a typical reflector assembly 21 located at position F. A stainless steel can or enclosure 22 completely encompasses the reflector assembly 21. A stainless steel inlet nozzle 23 and outlet nozzle 24 are provided at the reflector assembly inlet and outlet ends, respectively. The can 22 has disposed therein an array of parallel arranged reflector rods 25 each comprising a Zircaloy cladding tube 27 and zirconia pellets 26 stacked therein. End plugs 28 and 30 appropriately secured, such as by seal welding, to tube 27 maintain the integrity of the stack of pellets 26 in the reflector rod 25 and prevent the pellets 26 from being exposed to reactor coolant. At the edges of the can 22, where there is not sufficient space for a completely round rod, solid Zircaloy rods 31 of full length but only partially circular cross-section are used. The zirconia pellet 25 are stacked in the reflector rods 25 to a length consistent with and substantially equal to the active fuel length of the nuclear core so as to assure radial reflection of the neutrons. At assembly, the inner diameter of the Zircaloy cladding tube 27 of each rod is slightly larger than the outer diameter of the pellets 26 so as to facilitate the loading of the pellets into the tube. During initial reactor operation, the temperature and neutron flux prevailing at the reflector region will cause the cladding 27 to collapse against the zirconia pellets 26 whereby the initial clearance between the cladding and the pellets virtually disappears to further increase the integrity of the reflector rods 25. In this context, it is noted that zirconia has a high compressive strength and thus can support the cladding 27 both radially and axially. Additionally, since the thermal coefficient of expansion of zirconia is similar to that of Zircaloy, stresses induced by thermal cycling will be low. The reflector rods 25 and the partially round solid rods 31 may be radially spaced and supported by a plurality of axially spaced stainless steel plates 32. The plates 32 may be provided at core elevations which coincide with the locations of the fuel assembly grids 12, and they may be sized to fit closely within the associated can 22 to which they may be attached by means of screws 33. It is to be noted that although Figure 2 shows only one typical reflector rod 25, one central reflector rod 25, and one typical partially round reflector rod 31, each can 22 contains of course a number of such reflector rods 31, as shown in Figure 3.

Clearance holes 34 in the plates 32 are provided to allow the reflector rods 25 and 31 to pass therethrough and be laterally supported by plates 32, the clearance holes 34 being sized to closely fit the outer diameter of the round reflector rods 25 and the partially round rods 31. Flow holes 35 are also provided in the plates 32 to permit reactor bypass coolant flow through the reflector assemblies 21, the flow holes 35 being sized to control the coolant flow and to match the axial pressure distribution within the reflector assembly 21 with that of the nuclear core so as to minimize the pressure loading on the can 22.

Spacers 36 between the inner wall 20 of the core barrel 16 and the can 22 are provided at the axial location of plates 32 to fill the gap between the curved inner surface of the core barrel 16 and the straight surface of the can 22. The spacers 36 control coolant flow and transmit lateral seismic loads from the fuel assemblies 10 to the core barrel 16. A clearance space 37 is provided between the spacers 36 and the inner wall 20 of the core barrel 16. Clearances 38 and 40 are also provided between adjacent reflector assemblies 21 and the fuel assemblies 10 to allow heat removal from the reflector assemblies 21 and the core barrel 16. Thermal bowing of the reflector assemblies 21 is controlled by appropriately sizing the clearances 37, 38 and 40 and the flow holes 35 so as to provide greater flow rates and/or flow velocities in order to increase the transfer of heat from sections of the reflector assemblies 21 where heat generation is high.

The stainless steel inlet nozzle 23 of the reflector assembly comprises an upper plate 41 and a lower plate 42 spaced from each other by an inlet nozzle can 43. The plates 41, 42 and can 43 are joined together, and the upper plate 41 is joined to the stainless steel can 22, in a suitable·manner such as by welding. A plurality of windows 44 are provided in the can 43 to allow coolant to flow through the reflector assembly 21. The outlet nozzle 24 of the reflector assembly likewise comprises an upper plate 45, a lower plate 46 and an outlet nozzle can 47 having windows 48 formed therein, the plates 45, 46 and the can 47 being joined, e.g. welded, together and the lower plate 46 being joined, e.g. welded, to the stainless steel can 22. Each of the individual reflector rods 25 and 31, except the centermost rod 25, is connected to the upper plate 41 of the reflector inlet nozzle 23, such as by screws 50. Between the top of each reflector rod 24 or 31 and the lower plate 46 of the reflector assembly outlet nozzle 24 there is provided a clearance space 51 to accommodate thermal expansion and radiation creep. Each reflector assembly 21 is radially aligned within the nuclear core by means of a guide pin 52 extending through a corresponding hole 61 in the upper plate 45 of the outlet nozzle 24, much in the same manner as fuel assemblies 10 are aligned as well known in the art.

Each reflector assembly 21 is connected to the core support plate 18 in a manner as shown in Figure 2. More specifically, the center reflector rod 25 is provided with an elongated lower plug 53, the lower end portion 54 of which is threaded and which plug 53 extends through the upper plate 41 of the reflector assembly inlet nozzle 23. A mechanical connector 55 is threaded into, and swage-locked in position by, a locking ring 56. The threaded portion of the plug 53 is threadedly engaged with internal threads 57 in the connector 55. At its upper end, the center reflector rod 25 likewise is provided with an elongated plug 58 which however is not threaded but instead has thereon torque transmitting means, such as a hexagonal portion 60. By using a suitable conventional tool lowered through the guide pin hole 61 in the outlet nozzle upper plate 45 and engaged with the hexagonal portion 60, the center rod 25 can be rotated so as to secure it to the connector 55 and thereby secure the reflector assembly 21 to the lower core support plate 18. Any loosening effect upon the reflector assembly holddown force due to reactor operation is compensated for by Belleville springs 62.

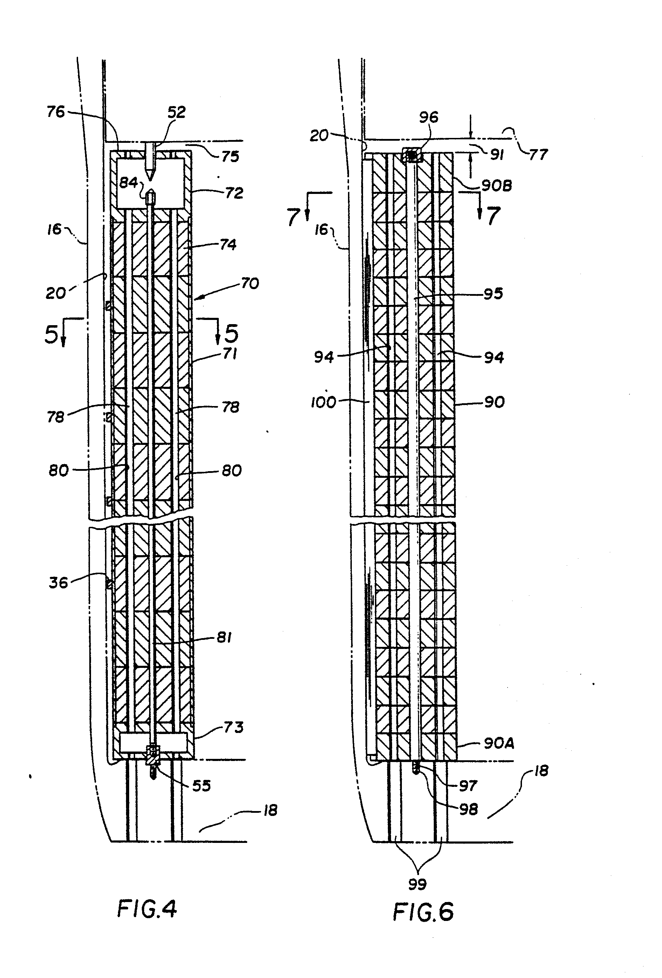

Figures 4 and 5 illustrate a second embodiment of the invention in the form of a reflector assembly 70 described likewise, as the previous one, with regard to position F of the reflector region. A Zircaloy can 71 is connected, such as by welding, to a Zircaloy upper outlet nozzle 72 and to a Zircaloy lower inlet nozzle 73.. As distinct from the can 22 of the first embodiment containing reflector rods, the can 71 is filled with reflector blocks 74 of zirconia stacked one upon another for the full length of the can 71. The can 71 in this embodiment can be made of Zircaloy because of the inherent structural stability of the stacked zirconia blocks. Clearance 75 between the upper plate 76 of the outlet nozzle 72 and the upper support plate 77 allows for thermal expansion and radiation creep of the reflector assembly 70.

The cross-sectional shape of the zirconia blocks 74 is shown in Figure 5 and at assembly is slightly smaller than the interior cross-sectional shape of the can 71 to facilitate loading of the blocks into the can. During reactor operation, the system pressure and temperature plus radiation cause the relatively thin Zircaloy cladding 71 to collapse against the zirconia blocks 74. Each of the zirconia blocks 74 is provided with cooling holes, such as holes 78, which are axially aligned with the corresponding cooling holes in the other blocks 74 and have cooling tubes 80 of Zircaloy extending therethrough. Each tube 80 is seal-welded at one end to the inlet nozzle 73 and at its other end to the outlet nozzle 72. When in use, reactor coolant flows through the cooling tubes 80 to control the temperature distribution through the cross-section of the zirconia blocks 74. Heat generation in the zirconia blocks 74 resulting from core radiation is maximum at locations nearest to the core and decreases quickly at locations progressively more distant from the core. Therefore, it is desirable to provide more cooling tubes 80, hence more coolant flow, in the area nearer to the core so as to prevent thermal bowing of the reflector assembly.

0152206

During operation, the system pressure will cause the cooling tubes 80 to expand radially into firm contact with the walls of the holes 78 in the zirconia blocks 74.

The reflector assembly 70 is connected to the lower core support plate 18 in the same manner as in the previous embodiment, i.e. by means of a threaded connection 55 which, however, utilizes a stainless steel tie rod 81 fitted into a Zircaloy tube 82 which extends through axially aligned center holes 83 in the zirconia blocks 74. A hexagonal upper end portion of the tie rod 81 allows torquing of the latter for securing the reflector assembly 70 to the connector 55. The Zircaloy tube 82 is also sealingly connected to the inlet nozzle 73 and the outlet nozzles 72.

In the manner described above, the zirconia blocks 74 are encapsulated within the space defined by the nozzles 72, 73 and the can 71 and thus are sealed from exposure to the reactor coolant.

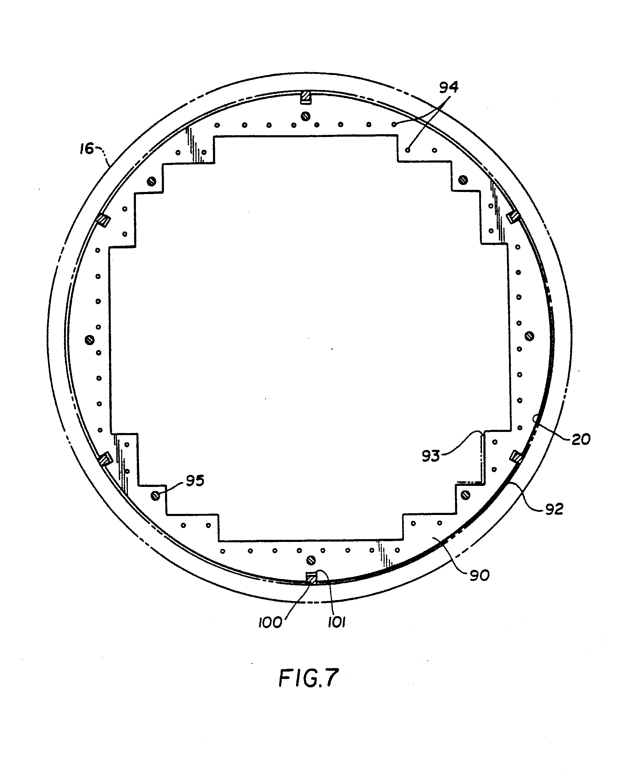

Figures 6 and 7 illustrate a third embodiment of the invention in which the reflector region is filled with stacked plates 90 made of stainless steel. Each of the plates 90 may consist of one piece having a predetermined thickness and a configuration which conforms, as seen from Fig. 7, substantially to the cross-sectional shape of the reflector region, i.e. the space between the core barrel 16 and the reactor core formed by the fuel assemblies 10. The reflector plates 90, thus shaped, are stacked in the reflector region substantially for the full active core length. In this embodiment, the lowermost reflector plate 90A of the stack rests direct upon the lower core support plate 18 whereas a clearance 91 is provided between the uppermost reflector plate 90B and the upper core support plate 77 to allow for axial thermal expansion. The size of the clearance 91 is not critical since the uppermost plate 90B is well above the height of the active core length and since, with the plates 90 made of stainless steel, there will be but a relatively minor difference in thermal expansion between the core support plates 18, 77 and the stack of reflector plates 90.

As seen from Fig. 7, there is a radial clearance 92 between the plates 90 and the inner wall 20 of the core barrel, and there is a radial clearance 93 between the reactor core and the plates 90. The reflector plates 90 are provided with axially aligned coolant flow holes 94 which are aligned with flow holes 99 (Fig. 6) in the lower core support plate 18. Coolant flow through the holes 94 in the reactor plates 90 and through the clearance spaces 92 and 93 will assure adequate cooling of the reflector plates 90 and minimize thermal distortion.

A plurality of tie rods 95 made of stainless steel and spaced, say 45° apart, around the reflector plates 90 are used to fasten the stack of reflector plates 90 to the lower core support plate 18. Each tie rod 95 has a hexagonal head 96 at its upper end and an externally threaded portion 97 at its lower end, the head 96 bearing against the upper surface of the uppermost reflector plate 90B and the threaded end portion 97 being threadedly engaged in threaded holes 98 formed in the lower core support plate 18 so that by torquing the head 96, the stacked reflector plates 90 are tightened against the lower core support plate 18.

A plurality of vertical keys 100 of substantially rectangular cross-section are welded to the inner wall 20 of the core barrel 16 at appropriate locations spaced about the inner periphery thereof. The keys 100 fit within corresponding grooves 101 (Fig. 7) formed in the outer periphery of the reflector plates 90. The keys 100 and the grooves 101 allow the reflector plates 90 to thermally expand vertically and radially but prevent positional displacement thereof. The keys 100 also provide lateral support against seismic loads.

Summing up, the embodiments described above represent various ways of displacing water (and therefore hydrogen which is a very ineffective reflector of fast leakage neutrons) in the region between the irregular core periphery and the core barrel with a substantially non-hydrogen containing material which, in the embodiments described, takes the form of a substantially solid structure comprising neutron reflective rods, blocks or plates.

0152206

15

CLAIMS:

1. A nuclear reactor using light water as a reactor coolant, and comprising a nuclear core and a core barrel which latter surrounds the core and, together therewith, defines therebetween a radial space forming a core bypass for some of the reactor coolant, characterized in that said radial space has disposed therein neutron reflecting means (21 or 70 or 90) comprising a substantially non-hydrogen containing material fitted within the radial space so as to minimize the coolant-containing capacity thereof.

2. A nuclear reactor according to claim 1, characterized in that said neutron reflecting means comprise a plurality of elongate reflector assemblies (21 or 70) arranged side-by-side and each comprising an elongate metal can (22 or 71) containing a plurality of neutron reflector elements (25, 31 or 74).

3. A nuclear reactor according to claim 2, characterized in that each of said reflector assemblies (21 or 70) includes a coolant inlet nozzle (23 or 73) and a coolant outlet nozzle (24 or 72) connected to opposite ends of the associated metal can (22 or 71).

4. A nuclear reactor according to claim 3, characterized in that said neutron reflector elements in each reflector assembly (21) are elongate rods (22 and 31) which extend longitudinally side-by-side within the associated can (22) between the inlet and outlet nozzles (23 and 24) thereof, said inlet and outlet nozzles including passages (64, 65) establishing coolant-flow communication between the nozzles and the interior of the associated can.

5. A nuclear reactor according to claim 4, characterized in that each reflector assembly (21) includes at least one rod-supporting plate (32) extending transversely within the associated can (22) and secured thereto, said or each plate (32) having formed therein openings (34) for the elongate rods (22 and 31) to extend therethrough, and having coolant-flow holes (35) extending therethrough.

6. A nuclear reactor according to claim 3, characterized in that said neutron reflector elements in each reflector assembly (70) are metal blocks (74) stacked one upon the other within the associated can (71) and substantially filling the latter, said coolant inlet and outlet nozzles (73, 72) and said metal blocks (74) including coolant flow passages (80) extending from the inlet nozzle through the metal blocks and into the outlet nozzle.

7. A nuclear reactor according to claim 1, characterized in that said neutron reflecting means comprise metal plates (90) each having an outline which substantially conforms to the cross-sectional configuration of said radial space, and which plates are stacked one upon the other so as to substantially fill the radial space, each metal plate (90) having formed therein openings (94) which are axially aligned with corresponding openings of adjacent metal plates so as to form coolant-flow passages extending axially throughout said stack.

FIG.1

0152206

FIG.2

FIG.3

FIG.5

415

0152206

FIG.4

FIG.6

FIG.7